(19) Europäisches Patentamt
European Patent Office
Office européen des brevets

(11) Numéro de publication: **0 316 225 B1**

(12) **FASCICULE DE BREVET EUROPEEN**

(45) Date de publication de fascicule du brevet: **27.07.94**

(51) Int. Cl.[5]: **C08G 18/18**, B32B 17/10

(21) Numéro de dépôt: **88402791.3**

(22) Date de dépôt: **07.11.88**

# (54) Procédé pour la fabrication en continu d'une couche de polyuréthane de haute qualité optique.

(30) Priorité: **12.11.87 FR 8715625**

(43) Date de publication de la demande:
**17.05.89 Bulletin 89/20**

(45) Mention de la délivrance du brevet:
**27.07.94 Bulletin 94/30**

(84) Etats contractants désignés:
**BE DE FR GB IT SE**

(56) Documents cités:
**EP-A- 0 142 838**
**EP-A- 0 191 666**
**US-A- 4 408 034**

(73) Titulaire: **SAINT-GOBAIN VITRAGE INTERNATIONAL**
**18, avenue d'Alsace**
**F-92400 Courbevoie(FR)**

(72) Inventeur: **Bravet, Jean-Louis**
**5 Avenue du Moulin**
**F-60150 Thourotte(FR)**
Inventeur: **Daude, Gérard**
**11 Rue René Voisin**
**F-33140 Villenave D'Ornon(FR)**
Inventeur: **Crux, Noel**
**Résidence du Parc**
**40 Rue d'Amiens**
**F-60200 Margny Les Compiegne(FR)**

(74) Mandataire: **Muller, René et al**
**SAINT-GOBAIN RECHERCHE**
**39, quai Lucien Lefranc-BP 135**
**F-93303 Aubervilliers Cédex (FR)**

EP 0 316 225 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention concerne la fabrication d'une feuille en matière plastique transparente de haute qualité optique qui peut être utilisée seule ou en association avec d'autres matériaux et notamment dans les vitrages feuilletés où elle est associé à un support monolithique ou feuilleté en verre et/ou en matière plastique, par exemple des parebrise de véhicule, la feuille de matière plastique comprenant au moins une couche à base d'un polyuréthane, notamment une couche de polyuréthane présentant des propriétés d'absorbeur d'énergie.

Des feuilles de matière plastique pouvant être utilisées dans des vitrages feuilletés du type décrit précédemment ont déjà été proposées. Ainsi dans la publication de brevet français 2 398 606, on décrit une feuille présentant deux couches, à savoir une couche d'une matière thermoplastique qui dans l'application aux vitrages feuilletés comprenant une seule feuille de verre est une couche intercalaire présentant des propriétés d'absorbeur d'énergie, et une couche de matière thermodurcissable présentant des propriétés d'antilacération et d'autocicatrisation.

La couche intercalaire ayant des propriétés d'absorbeur d'énergie est un polyuréthane thermoplastique obtenu à partir d'au moins un diisocyanate aliphatique et d'au moins un polyesterdiol ou polyétherdiol, le rapport des groupements équivalents NCO aux groupements équivalents OH étant de préférence compris entre 0,8 et 0,9. Le vitrage utilisant une telle feuille à deux couches conserve ses bonnes propriétés optiques et l'adhésion reste bonne entre les éléments, dans des conditions de température et d'humidité très variables, mais les propriétés bio-mécaniques du vitrage et notamment la résistance aux chocs ne sont pas entièrement satisfaisantes. En revanche, la feuille de matière plastique à deux couches peut être enroulée, manipulée aisément sans détérioration de sa qualité optique.

On connait encore d'après la publication de brevet européen 0 133 090 une feuille transparente de haute qualité optique apte à être utilisée seule ou en association avec d'autres matériaux et notamment dans la fabrication des vitrages feuilletés décrits précédemment, cette feuille comprenant une couche formée dans un processus en continu par coulée réactive, sur un support plan horizontal duquel elle est détachable, d'un mélange réactionnel d'un composant isocyanate et d'un composant à hydrogènes actifs notamment un composant polyol, le composant isocyanate comprenant au moins un diisocyanate aliphatique, cycloaliphatique ou un prépolymère de diisocyanate, ce composant ayant une viscosité inférieure à environ 5000 centipoises, à + 40 °C, le composant polyol comprenent au moins un polyol long difonctionnel de masse moléculaire comprise entre 500 et 4000 et au moins un diol court en tant qu'agent d'allongement de chaine. Par coulée réactive on entend la coulée sous forme d'une couche ou d'un film d'un mélange liquide des composants à l'état de monomères ou de prépolymères, suivie d'une polymérisation de cette couche par la chaleur.

Un vitrage de sécurité utilisant une telle couche présente de bonnes propriétés bio-mécaniques et ce, dans des conditions de température et d'humidité variables.

La polymérisation de la couche par la chaleur utilise un cycle thermique industriel, par exemple 20 minutes à une température de 120 °C. A la sortie de ce cycle industriel, il s'avère que la polymérisation ou le mûrissement de la couche n'est pas total. En fait, pour que la réaction soit complète il faudrait utiliser un cycle thermique de polymérisation beaucoup plus long que des cycles utilisés en production industrielle, il s'ensuit une ligne de fabrication très longue, ou alors il faudrait utiliser des températures plus élevées avec tous les inconvénients que cela peut comporter : consommation d'énergie importante, jaunissement de la couche, etc...

On pourrait aussi envisager d'augmenter le taux de catalyseur dans le mélange réactionnel, mais il se produit alors une polymérisation prématurée du mélange dans le dispositif d'apport dudit mélange sur la support et finalement la couche obtenue n'est pas optiquement homogène.

Un des inconvénients d'une polymérisation incomplète est la possibilité d'un marquage de la couche. Lorsqu'à la sortie de la ligne de fabrication de la feuille de matière plastique, pour des raisons de stockage et de facilité de manipulation, on enroule la feuille en bobines, on en forme des piles, en utilisant dans un cas comme dans l'autre un film intercalaire généralement en polyéthylène, et que l'on déroule ensuite la feuille ou qu'on la retire de la pile, avant son utilisation, on observe des marques ou empreintes laissées par le film intercalaire sur la couche de polyuréthane ayant des propriétés d'absorbeur d'énergie désignée plus commodément par couche AE.

Ces marques ne peuvent être éliminées totalement par la suite, même lorsqu'on soumet la feuille de matière plastique à un cycle thermique de plusieurs minutes à une température supérieure à 100 °C, par exemple 10 minutes à 120 °C.

Pour remédier à cet inconvénient, on a proposé dans la demande de brevet européen 87 401 402.0 de faire subir à la couche de polyuréthane AE obtenue par coulée réactive sur un support de coulée plan

comme décrit ci-dessus ou encore par pulvérisation réactive, présentant un état d'avancement de polymérisation correspondant à un rapport NCO/CH inférieur à 0,7, un traitement par de l'eau sous forme liquide ou vapeur et de préférence lorsque l'eau est sous forme liquide par de l'eau chaude à une température supérieure à 80 °C, pour obtenir un rapport NCO/CH nul (égal à zéro). Le rapport NCO/CH est le rapport entre la hauteur des pics NCO et la hauteur des pics CH du spectre infra-rouge de la couche AE à la sortie de la zone de polymérisation.

Le traitement par de l'eau permet d'achever rapidement la polymérisation de la couche tout en conservant, et même en améliorant les propriétés mécaniques de la couche, notamment sa résistance à la rupture et sa résistance à l'allongement.

Lorsque la couche est conditionnée et/ou stockée avec interposition d'un film intercalaire sous forme de feuilles empilées, ou sous forme d'un enroulement, après désempilage ou déroulement de la couche, on soumet celle-ci à un traitement thermique adéquat, par exemple un cycle d'au moins une minute à une température d'au moins 100 °C environ.

Le traitement par de l'eau chaude, selon l'invention, ne supprime pas à proprement parler le marquage de la couche dû au contact avec le film intercalaire, mais celui-ci n'est plus un marquage persistant car il peut disparaitre au cours d'un traitement thermique de la couche qui suit le déroulement de la bobine ou le désempilage des feuilles. Le traitement thermique postérieur peut s'effectuer juste avant l'assemblage avec le support pour former le vitrage.

Le traitement par de l'eau sous forme liquide ou vapeur nécessite cependant une ligne de Fabrication qui reste longue afin de permettre ce traitement alors que la couche est déjà à un degré de polymérisation correspondant à un rapport NCO/OH inférieur à 0,7.

L'EP-A-0 142 838 décrit un procédé de fabrication d'une résine de polyuréthane à base d'un composant isocyanate comportant un cycle 1-oxa-3,5-diazine-2,4,6-trione en effectuant la réaction de polymérisation en présence d'une amine tertiaire en phase gazeuse.

L'US-A-4 408 034 décrit un procédé semblable pour une résine de polyuréthane à base d'un composant isocyanate aromatique.

Ces deux documents ne concernent pas la fabrication d'une couche de polyuréthane à base d'un composant isocyanate aliphatique, transparente, de haute qualité optique utilisable dans les vitrages de sécurité.

Ces deux documents indiquent en outre qu'il n'y a pas d'action catalytique d'une amine tertiaire en phase gazeuse dans la réaction de polymérisation d'un polyuréthane lorsque l'isocyanate est aliphatique.

L'invention obvie aux inconvénients cités et propose un nouveau procédé en continu pour la fabrication de la couche de matière plastique à base de polyuréthane, rapide et économique.

Le procédé sel on l'invention comprend une coulée ou une pulvérisation réactive sur un support adéquat d'un mélange réactionnel d'un composant isocyanate aliphatique et d'un composant polyol et d'un catalyseur, apte à former une couche transparente de haute qualité optique utilisable dans les vitrages feuilletés, d'épaisseur supérieure à 0,1 mm, le composant isocyanate étant choisi parmi les isocyanates difonctionnels aliphatiques suivants : hexaméthylène (HMDI), 2,2,4-triméthyl1,6-hexanediisocyanate (TMDI), bis 4-isocyanatocyclohexylméthane (Hylène W), bis 3-méthyl-4-isocyanatocyclohexylméthane, 2,2 bis (4-isocyanatocyclohexyl)propane,3-isocyanatométhyl-3,5,5 triméthylcyclohexylisocyanate (IPDI),m-xylylènediisocyanate (XDI), m- et p-tétraméthylxylylènediisocyanate (m- et p-TMXDI), cis et transcyclohexane-1,4 diisocyanate (CHDI), 1,3-(diisocyanatométhyl) cyclohexane (XDI hydrogéné) et le 3-isocyanatométhyl-3,5,5 triméthylcyclohexylisocyanate comportant des fonctions urées (IPDI et dérivés), et le passage de la couche formée sur le support dans un tunnel de polymérisation contenant une atmosphère catalytique contenant au moins une amine tertiaire en phase gazeuse alors que la couche est portée à une température de l'ordre de 120 °C, la couche contenant une amine tertiaire qui par évaporation partielle forme l'atmosphère catalytique dans le tunnel de polymérisation.

Les amines tertiaires convenables sont les amines qui à la température de l'atmosphère pour le traitement de polymérisation sont à l'état de vapeur. Ces amines sont par exemple la triéthylamine, la méthyldiéthylamine, la diméthyléthylamine, la triméthylamine. On peut encore utiliser des amines substituées telles la diméthyléthanolamine.

L'atmosphère catalytique peut être une atmosphère saturée en amine tertiaire. On peut aussi utiliser une atmosphère formée d'un mélange d'air et d'une amine tertiaire, la concentration du mélange en amine en phase gazeuse étant supérieure à 0,1 % et de préférence supérieure à 10 % en volume par rapport au volume du mélange air-amine.

La température de l'atmosphère catalytique est avantageusement supérieure à 80 °C.

Sous un des aspects de l'invention, on procède à la coulée ou en la pulvérisation réactive sur un support du mélange réactionnel, en dehors de l'atmosphère catalytique et on fait passer ensuite la couche

formée dans l'atmosphère catalytique en vue d'accélérer la polymérisation, le passage de la couche étant effectué à un temps t compris entre 0 et 15 minutes à partir du temps to correspondant au dépôt du mélange réactionnel sur le support.

Sous un autre aspect de l'invention, la formation même de la couche est faite dans l'atmosphère catalytique qui est celle de polymérisation ultérieure.

La couche peut contenir également un agent nappant tel une résine silicone, un ester fluoroalkylé, une résine acrylique.

La couche AE que l'on peut polymériser selon l'invention a été décrite précédemment sous sa forme générale. Les proportions des composants du polyuréthane formant la couche AE sont choisies pour obtenir de préférence un système stoechiométriquement équilibré, c'est-à-dire que le rapport des groupements équivalents NCO apportés par le composant diisocyanate aux groupements équivalents OH apportés par le composant polyol, c'est-à-dire le ou les polyols longs et le ou les diols courts est de l'ordre de 1. Lorsque le rapport NCO/OH est inférieur à 1, plus il décroit et plus les propriétés mécaniques recherchées pour l'application dans un vitrage feuilleté deviennent rapidement plus satisfaisantes. Lorsque tous les composants du polyuréthane sont difonctionnels, la limite inférieure de rapport NCO/OH pour l'obtention de propriétés mécaniques satisfaisantes se situe à 0,9 environ. Lorsqu'un des composants au moins est trifonctionnel cette limite inférieure peut être baissée jusqu'à 0,8 environ. Lorsque le rapport NCO/OH est supérieur à 1, plus il croît et plus certaines propriétés mécaniques de la couche obtenue par coulée réactive sont renforcées, par exemple la couche devient plus rigide, mais étant donné le coût plus élevé du composant isocyanate par rapport à celui du composant polyol, le choix de ce rapport NCO/OH sensiblement égal à 1 est un bon compromis entre les propriétés obtenues et le coût.

Les proportions entre le polyol long et le diol court peuvent varier en fonction des propriétés désirées et aussi du rapport des groupements équivalents, le nombre des groupements équivalents OH dus au diol court représentant cependant généralement de 20 à 70 % des groupements équivalents totaux du mélange formant le composant polyol dans le bas où le rapport des groupements équivalents NCO sur les groupements OH est de l'ordre de 1. Lorsqu'on augmente la proportion du diol court on durcit la couche et on augmente généralement son module.

Les diisocyanates convenables utilisés dans le cadre de l'invention sont choisis notamment parmi les isocyanates difonctionnels aliphatiques suivants : hexaméthylènediisocyanate (HMDI), 2,2,4-triméthyl-1,6-hexanediisocyanate (TMDI), bis(4-isocyanatocyclohexyl)méthane (Hylène W), bis-(3-méthyl-4-isocyanatocyclohexyl)méthane, 2,2 bis (4-isocyanatocyclohexyl) propane, 3-isocyanatométhyl-3,5,5-triméthylcyclohexylisocyanate (IPDI), m-xylylènediisocyanate (XDI), m- et p-tétraméthylxylylènediisocyanate (m- et p- TMXDI), cis et transcyclohexane-1,4 diisocyanate (CHDI), 1,3-(diisocyanatométhyl) cyclo-hexane (XDI hydrogéné).

On peut utiliser un composant isocyanate contenant des fonctions urées. Ces fonctions urées améliorent certaines propriétés mécaniques de la couche. Le taux d'urée peut représenter jusqu'à environ 10 % du poids total du composant isocyanate à fonctions urées. De préférence le taux d'urée est compris entre 5 et 7 % du poids total dudit composant. Pour la raison invoquée précédemment on utilise de préférence du 3-isocyanatométhyl-3,5,5 triméthylcyclohexylisocyanate comportant des fonctions urées (IPDI et dérivés).

Les polyols longs convenables sont choisis parmi des polyétherdiols ou des polyesterdiols de masse moléculaire 500 - 4000 ; les polyesterdiols étant les produits d'estérification d'un diacide tel que l'acide adipique, succinique, palmitique, azelaïque, sébacique, ophtalique, et d'un diol tel un éthylèneglycol, propanediol -1,3, butanediol - 1,4, hexanediol -1,6, les polyétherdiols de formule générale $H \{ O (CH_2)n \}_m$ OH avec n = 2 à 6 ; m tel que la masse moléculaire soit située dans l'intervalle 500 - 4000 ou les polyétherdiols de formule générale

$$H \{ O\underset{}{\overset{CH_3}{|}}{CH} - CH_2 \}_m OH$$

avec m tel que la masse moléculaire soit située également dans l'intervalle 500 - 4000. On peut encore utiliser des polycaprolactone-diols.

On utilise de préférence un polytétraméthylène glycol (n = 4) de masse moléculaire 1000.

Les agents d'allongement de chaines convenables sont des diols courts de masse moléculaire inférieure à environ 300 et de préférence inférieure à 150, tels que les : éthylèneglycol, propanediol-1,2, propanediol-1,3, butanediol-1,2, -1,3, -1,4, diméthyl-2,2 propanediol1,3 (néopentylglycol), pentanediol-1,5, hexanediol-1,6, octanediol-1,8, décanediol-1,10, dodécanediol-1,12, cyclohexanediméthanol, bisphénol A, méthyl-2 pentanediol-2,4, méthyl-3 pentanediol- 2,4, éthyl- 2 hexanediol-1,3, triméthyl-2,2,4-pentanediol-1,3,

diéthylèneglycol, triéthylèneglycol, tétraéthylèneglycol, butyne-2-diol-1,4, butènediol-1,4 et décynediol substitués et/ou éthérifiés, hydroquinone-bis-hydroxyéthyléther, bisphénol A éthérifiés par deux ou quatre groupes d'oxyde de propylène, acide diméthylolproponique. En général plus le diol est court plus la couche est dure.

On utilise de préférence le butanediol-1,4 qui est un bon compromis pour l'obtention d'une couche ni trop dure, ni trop souple, que l'on recherche pour ce type d'application en tant qu'absorbeur d'énergie.

Le composant polyol peut contenir une faible proportion d'au moins un polyol de fonctionnalité supérieure à deux et notamment des triols aliphatiques monomères tels le glycérol, le triméthylolpropane, des triols à chaines polyéther, des triols de polycaprolactone, la masse moléculaire de ces triols étant généralement comprise entre 90 et 1000, les polyols mixtes polyéther/polyester de fonctionnalité supérieure à 2, par exemple de fonctionnalité comprise entre 2 et 3. L'ajout d'un polyol de fonctionnalité supérieure à 2 provoque des liaisons de pontage supplémentaires entre les chaines du polyuréthane et peut ainsi encore améliorer la cohésion de la couche.

Les proportions entre le polyol long, le diol court et éventuellement le polyol de fonctionnalité supérieure à 2 peuvent varier selon les propriétés désirées. On choisit généralement des proportions telles que pour un équivalent hydroxyle le polyol long représente environ de 0,30 à 0,45 équivalent, le diol court d'environ 0,2 à 0,7 équivalent et le polyol de fonctionnalité supérieure à 2 environ 0 à 0,35 équivalent.

On peut encore réaliser la couche en remplaçant une partie du composant polyol par un produit à hydrogènes actifs différents tel une amine.

Suivant une réalisation de la couche de matière plastique, le composant isocyanate peut contenir dans des proportions limitées, par exemple inférieures à environ 15 % en équivalent NCO, au moins un triisocyanate tels un biuret d'isocyanate ou un triisocyanurate.

Sous un des aspect du procédé du procédé selon l'invention, il s'applique à la feuille formée de la seule couche décrite précédemment.

Dans une variante, le procédé selon l'invention s'applique à la couche décrite précédemment alors qu'elle est associée a une couche de matière plastique autocicatrisable, c'est-à-dire résistant à la rayure et à l'abrasion et qui, avantageusement, peut également être polymérisée en atmosphère catalytique.

La couche autocicatrisable résistante à la rayure en matière plastique est par exemple celle décrite dans les publications de brevets françaises 2 187 719 et 2 251 608. Cette couche autocicatrisable a dans les conditions normales de température, une haute capacité de déformation élastique, un faible module d'élasticité, inférieur à 2000 $daN/cm^2$ et de préférence inférieur à 200 $daN/cm^2$, et un allongement à la rupture de plus de 60 % avec moins de 2 % de déformation plastique et de préférence un allongement à la rupture de plus de 100 % avec moins de 1 % de déformation plastique. Les couches préférées de ce type sont des polyuréthanes thermodurcissables ayant un module d'élasticité d'environ 25 à 200 $daN/cm^2$ et un allongement d'environ 100 à 200 % avec moins de 1 % de déformation plastique.

Des exemples de monomères qui conviennent pour la préparation de ces polyuréthanes thermodurcissables sont d'une part les isocyanates difonctionnels aliphatiques comme le 1,6-hexanediisocyanate, le 2,2,4-triméthyl-1,6-hexanediisocyanate, le 2,4,4-triméthyl-1,6-hexanediisocyanate, le 1,3-bis (isocyanatométhyl)benzène, le bis (4-isocyanatocyclohexyl)méthane, le bis (3-méthyl-4-isocyanatocyclohexyl) méthane, le 2,2-bis(4-isocyanatocyclohexyl)propane et le 3-isocyanatométhyl-3,5,5-triméthylcyclohexylisocyanate, ainsi que les biurets, isocyanurates et prépolymères de ces composés ayant une fonctionnalité de 3 ou davantage et d'autre part les polyols polyfonctionnels, comme les polyols ramifiés tels que les polyesterpolyols et polyétherpolyols obtenus - par réaction d'alcools polyfonctionnels, notamment le 1,2,3-propanetriol (glycérol), le 2,2-bis (hydroxyméthyl)-1-propanol (triméthyloléthene), le 2,2-bis (hydroxyméthyl)-1-butanol (triméthylolpropane), le 1,2,4,-butane-triol, le 1,2,6-hexane-triol, le 2,2-bis (hydroxyméthyl)-1,3-propane-diol (pentaérythritol) et le 1,2,3,4,5,6-hexane-hexol (sorbitol), avec des diacides aliphatiques comme l'acide malonique, l'acide succinique, l'acide glutarique, l'acide adipique, l'acide subérique et l'acide sébacique ou avec des éthers cycliques, comme l'oxyde d'éthylène, l'oxyde de 1,2-propylène et le trétrahydrofurane.

Le poids moléculaire des polyols ramifiés est avantageusement d'environ 250 à 4000 et de préférence d'environ 450 à 2000. Des mélanges de différents polyisocyanates et polyols monomères peuvent être utilisés. Des polyuréthanes thermodurcissables particulièrement préférés sont ceux décrits dans les publications de brevets français 2 251 608 et européens 0 190 517 ou 0 133 090.

Sous un aspect de l'invention, la couche autocicatrisable lorsqu'elle est formée d'un polyuréthane thermodurcissable est également obtenue par passage de la couche, dans une atmosphère catalytique d'une amine tertiaire afin d'accélérer sa polymérisation que cette couche soit associée par la suite à une couche AE comme décrit précédemment ou qu'elle soit fabriquée isolément par coulée réactive ou pulvérisation réactive.

La couche de polyuréthane pouvant être polymérisée selon l'invention peut présenter une épaisseur pouvant aller jusqu'à 1 mm environ.

D'autres avantages et caractéristiques de l'invention apparaitront dans la description des exemples suivants :

EXEMPLES TEMOINS 1 A 5

Pour fabriquer une couche de polyuréthane ayant des propriétés d'absorbeur d'énergie, utilisable dans les vitrages de sécurité, on prépare au préalable un composant polyol en mélangeant un polytétraméthylèneglycol de masse moléculaire 1000, avec du butanediol-1,4, les proportions des deux constituants étant telles que le polytétraméthylèneglycol apporte 0,37 équivalent en groupes hydroxyles alors que le butanediol-1,4 en apporte 0,63.

Au composant polyol on incorpore un stabilisant à raison de 0,5 % en poids de la masse totale du composant polyol et du composant isocyanate, un agent nappant à raison de 0,05 % en poids calculé de la même façon et un catalyseur à savoir du dilaurate de dibutylétain à raison de 0,01 % en poids calculé de la même façon que précédemment.

Le composant isocyanate utilisé est du 3-isocyanatométhyl-3,5,5 triméthylcyclohexylisocyanate (IPDI) présentant des fonctions urées obtenues par hydrolyse partiel le de l'IPDI et ayant une teneur en groupements NCO d'environ 31,5 % en poids.

Les composants sont pris en quantités telles que le rapport NCO/OH est de 1.

Après dégazage sous vide des composants, le mélange porté à environ 40 °C est coulé à l'aide d'une tête de coulée comme celle décrite dans la publication de brevet français 2 347 170, sur un support revêtu d'un agent de séparation. On forme ainsi une couche d'environ 0,5 mm d'épaisseur qui est soumise à un cycle de polymérisation.

Ce cycle consiste à porter la couche à une température de 120 °C durant 19 minutes et à introduire cette couche durant au moins une partie de cette période dans une atmosphère catalytique de triéthylamine. Le tableau 1 indique les taux de NCO mesurés pour des concentrations variables de catalyseur amine lorsqu'on introduit la couche dans l'atmosphère catalytique, à différents temps à partir du temps to correspondant à l'apport du mélange réactionnel sur le support.

EXEMPLE TEMOIN 1'

Dans cet exemple témoin 1, on opère comme précédemment sauf qu'on utilise un cycle de polymérisation thermique uniquement.

EXEMPLES 6 ET 7

On opère de la même façon que dans les exemples témoins précédents, sauf qu'on supprime le catalyseur d'étain contenu dans le mélange réactionnel et qu'on incorpore audit mélange de la triéthylamine à raison de 2,5 % en poids du polyuréthane à fabriquer.

Dans l'exemple 6 non conforme à l'invention, la polymérisation est effectuée en atmosphère libre et la partie de l'amine qui se dégage ne peut former une atmosphère catalytique.

Dans l'exemple 7, la polymérisation est effectuée dans un tunnel et la partie de l'amine qui se dégage de la couche se mélange à l'air pour former une atmosphère catalytique.

| | t°C | Concentration en $Et_3N$ | Taux de NCO | | | | |
|---|---|---|---|---|---|---|---|
| | | | To | +5 (mn) | +10 (mn) | +13 (mn) | To+19 (mn) |
| ex.témoin 1' | 120 | - | 10,5 | 5 | 1,45 | 1,20 | 0,77 |
| exemple 1 (témoin) | 120 | 0,3 % | " | | Introd. dans $Et_3N$ | | 0,5 |
| exemple 2 (témoin) | 120 | 18,6 % | " | | " | | 0,2 |
| exemple 3 (témoin) | 120 | 18,6 % | " | Introd dans $Et_3N$ | | | 0,1 |
| exemple 4 (témoin) | 120 | 18,6 % | Int. dans $Et_3N$ | 2 | | 0 | 0 |
| exemple 5 (témoin) | 65°C | 18,6 % | 10,5 | Introd dans $Et_3N$ | | | 2 |
| exemple 6 (témoin) | 120 | $Et_3N$ dans le mêlange coulê 2,5 % poids du polyurêthane | | | | | 3,3 |
| exemple 7 | 120 | | | | | | 0,75 |

Le taux de NCO correspond au poids des groupements NCO par rapport au poids total de la couche.

La concentration en $Et_3N$ est la concentration exprimée en volume de l'amine par rapport au volume total de l'atmosphère catalytique.

Les exemples montrent que la polymérisation est d'autant plus avancée que l'on augmente la durée de la catalyse en phase gazeuse.

Elle est d'autant plus rapide que la concentration de l'atmosphère en catalyseur est élevée.

Il est nécessaire d'opérer à une température supérieure à environ 80 ° C.

La polymérisation en atmosphère catalytique selon l'invention permet donc d'accélérer la vitesse de polymérisation et de réduire la longueur de la ligne de fabrication. L'exemple 4 montre que 13 minutes sont suffisantes pour polymériser totalement une couche de 0,5 mm d'épaisseur.

La couche obtenue peut être ultérieurement traitée par de l'eau en phase liquide ou vapeur. Grâce à la polymérisation en atmosphère catalytique, selon l'invention, ce traitement pourra s'effectuer plus tôt par rapport au temps to correspondant à la formation de la couche sur le support.

## Revendications

1. Procédé de fabrication en continu d'une couche de polyuréthane de haute qualité optique utilisable dans les vitrages feuilletés, par coulée réactive ou pulvérisation réactive sur un support d'un mélange réactionnel comprenant un composant isocyanate aliphatique et un composant polyol, suivi d'un cycle de polymérisation de la couche sur son support, ce cycle comprenant le passage de la couche dans une atmosphère gazeuse catalytique contenant au moins une amine tertiaire caractérisé en ce que le composant isocyanate est choisi parmi les isocyanates difonctionnels aliphatiques suivants :
hexaméthylènediisocyante (HMDI), 2,2,4-triméthyl-1,6-hexanediisocyanate (TMDI), bis(4-isocyanatocyclohexyl)méthane (Hylène W),bis(3-méthyl-4-isocyanatocyclohexyl)méthane,2,2bis (4-isocyanatocyclohexyl)propane,3-isocyanatométhyl-3,5,5 - triméthylcyclohexylisocyanate (IPDI),m-xylylènediisocyanate (XDI),m- et p-tétraméthylxylylènediisocyanate (m- et p-T-MXDI), cis et transcyclohexane-1,4 diisocyanate (CHDI), 1,3-(diisocyanatométhyl) cyclohexane (XDI hydrogéné) et le 3-isocyanatométhyl-3,5,5 - triméthylcyclohexylisocyanate comportant des fonctions urées, et en ce que la couche qui présente une épaisseur supérieure à 0,1 mm et qui contient une amine tertiaire qui par évaporation partielle forme l'atmosphère catalytique dans un tunnel de polymérisation, est portée à une température de 120 °C lors de son passage à travers le tunnel de polymérisation comprenant l'atmosphère catalytique.

2. Procédé selon la revendication 1, caractérisé en ce que l'atmosphère catalytique présente une teneur en amine tertiaire supérieure à 0,1 % exprimée en volume en amine en phase gazeuse par rapport au volume total de l'atmosphère.

3. Procédé selon une des revendications 1 à 2, caractérisé en ce que le passage de la couche dans l'atmosphère catalytique est effectué dans un temps compris entre 0 et 15 minutes à partir du dépôt du mélange réactionnel pour former la couche.

4. Procédé selon la revendication 3, caractérisé en ce que le passage de la couche dans l'atmosphère catalytique s'effectue directement après la formation de la couche.

5. Procédé selon la revendication 4, caractérisé en ce que la formation de la couche s'effectue dans l'atmosphère catalytique.

6. Procédé selon une des revendications 1 à 5, caractérisé en ce que l'atmosphère catalytique est à une température supérieure à 80 °C.

7. Procédé selon une des revendications 2 à 6, caractérisé en ce que l'atmosphère catalytique est saturée en amine tertiaire.

8. Procédé selon une des revendications 1 à 7, caractérisé en ce que l'amine tertiaire est choisie parmi la triéthylamine, la méthyldiéthylamine, la diméthyléthylamine, la triméthylamine, la diméthyléthanolamine.

9. Procédé selon une des revendications 1 à 8, caractérisé en ce qu'il est suivi d'un traitement par de l'eau sous forme liquide ou gazeuse.

## Claims

1. Process for the continuous production of a high optical quality polyurethane coating usable in laminated glazings, by reactive spraying or pouring onto a support of a reaction mixture incorporating an aliphatic isocyanate component and a polyol component, followed by a cycle of polymerizing the coating on its support, said cycle comprising the passage of the coating into a catalytic gaseous atmosphere containing at least one tertiary amine, characterized in that the isocyanate component is chosen from among the following aliphatic difunctional isocyanates:
hexamethylene diisocyanate (HMDI), 2,2,4-trimethyl-1,6-hexane diisocyanate (TMDI), bis-(4-isocyantocyclohexyl)-methane (HYLENE W), bis-(3-methyl-4-isocyanatocyclohexyl)-methane, 2,2-bis-(4-isocyanatocyclohexyl)-propane, 3-isocyanatomethyl-3,5,5-trimethylcyclohexyl isocyanate (IPDI), m-xylylene diisocyanate (XDI), m- and p- tetramethylxylylene diisocyanate (m- and p-T-MXDI), cis and transcyclohexane-1,4-diisocyanate (CHDI), 1,3-(diisocyanatomethyl)-cyclohexane (hydrogenated XDI) and 3-isocyanatomethyl-3,5,5-trimethylcyclohexyl isocyanate having urea functions and in that the coating having a thickness exceeding 0.1mm and containing a tertiary amine which, by partial evaporation, forms the catalytic atmosphere in a polymerization tunnel, is heated to a temperature of 120 °C during its passage through the polymerization tunnel containing the catalytic atmosphere.

**2.** Process according to claim 1, characterized in that the catalytic atmosphere has a tertiary amine content exceeding 0.1%, expressed as volume of gaseous phase amine based on the total volume of the atmosphere.

**3.** Process according to one of the claims 1 and 2, characterized in that the passage of the coating into the catalytic atmosphere takes place in a time between 0 and 15 minutes from the deposition of the reaction mixture for forming the coating.

**4.** Process according to claim 3, characterized in that the passage of the coating into the catalytic atmosphere takes place directly following the formation of the coating.

**5.** Process according to claim 4, characterized in that the coating is formed in the catalytic atmosphere.

**6.** Process according to one of the claims 1 to 5, characterized in that the catalytic atmosphere is at a temperature exceeding 80 °C.

**7.** Process according to one of the claims 2 to 6, characterized in that the catalytic atmosphere is saturated with tertiary amine.

**8.** Process according to one of the claims 1 to 7, characterized in that the tertiary amine is chosen from among triethyl amine, methyl diethyl amine, dimethyl ethyl amine, trimethyl amine and dimethyl ethanol amine.

**9.** Process according to one of the claims 1 to 8, characterized in that it is followed by a treatment with water in liquid or gaseous form.

## Patentansprüche

**1.** Verfahren zur kontinuierlichen Herstellung einer Polyurethanschicht hoher optischer Qualität, die in Verbundverglasungen verwendbar ist, indem auf einem Träger durch Reaktionsgießen oder -spritzen ein Reaktionsgemisch aufgebracht wird, das eine aliphatische Isocyanatkomponente und eine Polyolkomponente enthält, und anschließend die Schicht auf ihrem Träger einem Polymerisationszyklus unterworfen wird, wobei dieser Zyklus den Durchlauf der Schicht in einer katalytischen gasförmigen Atmosphäre umfaßt, die wenigstens ein tertiäres Amin enthält, **dadurch gekennzeichnet, daß** die Isocyanatkomponente aus folgenden bifunktionellen Isocyanaten ausgewählt ist:
Hexamethylendiisocyanat (HMDI), 2,2,4-Trimethyl-1,6-hexandiisocyanat (TMDI), Bis(4-isocyanatocyclohexyl)methan, (Hylène W), Bis(3-methyl-4-isocyanatocyclohexyl)methan, 2,2-Bis(4-isocyanatocyclohexyl)propan, 3-Isocyanatomethyl-3,5,5-trimethylcyclohexylisocyanat (IPDI), m-Xylylendiisocyanat (XDI), m- und p-Tetramethylxylylendiisocyanat (m- und p-T-MXDI), *cis*- und *trans*-Cyclohexan-1,4-diisocyanat (CHDI), 1,3-(Diisocyanatomethyl)-cyclohexan (hydriertes XDI) und funktionelle Harnstoffgruppen enthaltendes 3-Isocyanatomethyl-3,5,5-trimethylcyclohexylisocyanat,
**und daß** die Schicht eine Dicke von über 0,1 mm aufweist, sie ein tertiäres Amin enthält, das durch teilweise Verdampfung die katalytische Atmosphäre in einem Polymerisationstunnel bildet, und sie während ihres Durchlaufs durch den Polymerisationstunnel, der die katalytische Atmosphäre enthält, auf eine Temperatur von 120 °C gebracht wird.

**2.** Verfahren nach Anspruch 1, **dadurch gekennzeichnet, daß** die katalytische Atmosphäre einen Anteil an tertiärem Amin von über 0,1 % aufweist, ausgedrückt als Verhältnis des Aminvolumens in der Gasphase zum Gesamtvolumen der Atmosphäre.

3. Verfahren nach Anspruch 1 oder 2, **dadurch gekennzeichnet, daß** der Durchlauf der Schicht in der katalytischen Atmosphäre in einem Zeitraum zwischen 0 und 15 Minuten nach dem Abscheiden des Reaktionsgemischs zur Bildung der Schicht erfolgt.

4. Verfahren nach Anspruch 3, **dadurch gekennzeichnet, daß** der Durchlauf der Schicht in der katalytischen Atmosphäre unmittelbar nach Herstellung der Schicht erfolgt.

5. Verfahren nach Anspruch 4, **dadurch gekennzeichnet, daß** die Herstellung der Schicht in einer katalytischen Atmosphäre erfolgt.

6. Verfahren nach einem der Ansprüche 1 bis 5, **dadurch gekennzeichnet, daß** die katalytische Atmosphäre eine Temperatur von über 80 °C aufweist.

7. Verfahren nach einem der Ansprüche 2 bis 6, **dadurch gekennzeichnet, daß** die katalytische Atmosphäre mit tertiärem Amin gesättigt ist.

8. Verfahren nach einem der Ansprüche 1 bis 7, **dadurch gekennzeichnet, daß** das tertiäre Amin aus Triethylamin, Methyldiethylamin, Dimethylethylamin, Trimethylamin und Dimethylethanolamin ausgewählt ist.

9. Verfahren nach einem der Ansprüche 1 bis 8, **dadurch gekennzeichnet, daß** anschließend eine Behandlung mit Wasser in flüssiger oder gasförmiger Form durchgeführt wird.